# EUROPÄISCHE PATENTSCHRIFT

(11) **EP 0 846 655 B1**
(45) Veröffentlichungstag und Bekanntmachung des Hinweises auf die Patenterteilung: **29.10.2003**
(21) Anmeldenummer: 97120922.6
(22) Anmeldetag: 28.11.1997
(51) Int. Cl.: C01B 15/043, B09C 1/10

(54) **Erdalkalimetallperoxid-Produkt**
Alkaline earth metal peroxide product
Produit à base de peroxydes de métaux alcalino-terreux

(30) Priorität: 06.12.1996 DE 19650686
(43) Veröffentlichungstag der Anmeldung: 10.06.1998
(73) Patentinhaber: Solvay Interox GmbH, 30173 Hannover (DE)
(72) Erfinder: Dötsch, Werner, 53557 Bad Hönningen (DE); Caspar, Otto, 56564 Neuwied (DE)
(74) Vertreter: Gosmann, Martin

(56) Entgegenhaltungen:
- WO-A-91/09821
- WO-A-93/00178
- GB-A- 2 048 842
- US-A- 5 000 942
- PATENT ABSTRACTS OF JAPAN vol. 011, no. 315 (C-451), 14.Oktober 1987 & JP 62 103002 A (ISHIHARA HIRYO KOGYO KK), 13.Mai 1987,
- PATENT ABSTRACTS OF JAPAN vol. 013, no. 084 (C-572), 27.Februar 1989 & JP 63 270612 A (ISHIHARA HIRYO KOGYO KK), 8.November 1988,
- CHEMICAL ABSTRACTS, vol. 78, no. 20, 21.Mai 1973 Columbus, Ohio, US; abstract no. 126415, TERASHI, MICHIO ET AL: "Manufacture of calcium peroxide" XP002058095 & JP 47 033 096 A (JAPAN PEROXIDE CO., LTD.)

## Beschreibung

Die Erfindung bezieht sich auf ein Erdalkalimetallperoxid-Produkt, dessen Herstellung und Verwendung.

Erdalkalimetallperoxide, insbesondere Calciumperoxid, sind im Stand der Technik bekannt und werden für vielfältige Anwendungen eingesetzt. Ein weit gebräuchliches Erdalkalimetallperoxid ist das Calciumperoxid, das u. a. als Sauerstoffspender für aerobe Mikroorganismen bei der Behandlung und Beseitigung von Bioabfällen eingesetzt wird. Typische Anwendungsbereiche sind z. B. die Vermeidung von Geruchsbildung, beispielsweise in Biotonnen und Biotonnensammelstellen, die Verbesserung der Verrottungseigenschaften von organischen Materialien (Biomaterialien) bei der Kompostierung und die Fäulnisverhinderung, beispielsweise in Kompostmieten mit hohem Anteil an Grasschnitt. In der Regel wird der Sauerstoffspender Calciumperoxid jedoch nicht allein eingesetzt, sondern mit weiteren Zusätzen wie Streckmittel, beispielsweise Silikate oder Alumosilikate, und Mineralsalzen verwendet. Bei der Behandlung von Bioabfällen ebenso wie bei der Abwasserreinigung herrscht gewöhnlich ein genereller Mangel an Spurenelementen, in der Regel also auch ein Mangel an Magnesium, in den jeweiligen Systemen. Im Stand der Technik wird daher den Biomaterialien Magnesium in Form von anorganischen Salzen, z. B. als Sulfat, oder in Form von Magnesiumsilikaten bei der Behandlung zugesetzt, um die Leistungsfähigkeit der Mikroorganismen zu stützen bzw. zu erhöhen. Die einzelnen Komponenten zur Behandlung der Biomaterialien werden im Stand der Technik jedoch separat unter das Biomaterial untergemischt, wodurch die Einzelkomponenten aufgrund mangelnder Durchmischung oftmals nicht optimal zusammenwirken können; dies gilt insbesondere, wenn einzelne Komponenten wie z. B. Magnesium in geringen Mengen zugesetzt werden und dementsprechend nur schwer oder nur durch aufwendiges Mischen gleichmäßig in der Biomasse verteilt werden kann.

In JP-A-62103002 wird ein Sauerstoffzufuhrmittel für landwirtschaftliche Zwecke offenbart, das mit Magnesiumsulfat umhülltes Erdalkaliperoxid enthält. Als Erdalkaliperoxid kann auch ein Calcium/Magnesiumperoxid eingesetzt werden, das durch Vermischen von Calcium- und Magnesiumoxid und Behandlung der Festsubstanz mit Wasserstoffperoxid hergestellt wurde.

Die GB-A-2 048 842 offenbart ein Verfahren zur Herstellung von einheitlichen Metallperoxiden durch Umsetzung von wässrigen Lösungen oder Suspensionen von Metalloxiden oder - hydroxiden mit Wasserstoffperoxidlösung. Die Herstellung von Mischoxiden wird durch diese Schrift nicht vorweggenommen.

WO-A-93/00178 offenbart die Verwendung von Erdalkalimetallperoxiden in Kombination mit Phosphationen zur Behandlung von mit Umweltgiften belastetem Erdreich.

Es bestand daher die Aufgabe, Magnesium in einer leicht in das Biomaterial einmischbaren Form zur Verfügung zu stellen, die optimal mit dem eingesetzten Sauerstofflieferanten Calciumperoxid zusammenwirken kann, wobei das bereitgestellte Peroxid einen hohen Aktivsauerstoffgehalt aufweisen soll.

Die Aufgabe wird gelöst durch die Bereitstellung des in den Ansprüchen angegebenen Erdalkalimetallperoxid-Produktes, sowie dessen einfache Herstellung und zweckentsprechende Verwendung.

Demgemäß betrifft die Erfindung ein homogenes Calcium/Magnesium-Peroxid, welches neben seinem Gehalt an Calcium, Aktivsauerstoff und gegebenenfalls geringfügigen, bei der Herstellung von anorganischen Persauerstoffverbindungen üblichen Additiven und/oder Stabilisatoren insbesondere durch einen Magnesiumgehalt von 2 bis 17 Gew.-% und einen Aktivsauerstoffgehalt > 13 Gew % gekennzeichnet ist. Vorzugsweise beträgt der Magnesiumgehalt im erfindungsgemäßen Calcium/Magnesium-Peroxid-Produkt 2 bis 10 Gew.-%. Der Aktivsauerstoffgehalt im erfindungsgemäßen Calcium/Magnesium-Peroxid-Produkt beträgt in der Regel 13 bis 17 Gew.-%. Der Calciumgehalt im erfindungsgemäßen Calcium/Magnesium-Peroxid-Produkt liegt in der Regel bei 30 bis 53 Gew.-%; bevorzugt sind Calciumgehalte von 40 bis 50 Gew.-%. Das erfindungsgemäße Calcium/Magnesium-Peroxid-Produkt ist ein Erdalkalimetallperoxid, in dem Calciumperoxid und Magnesiumperoxid auf molekularer Ebene homogen untereinander verteilt vorliegen. Je nach Aktivsauerstoffgehalt dieses Produktes, der durch die entsprechende Menge des eingesetzten Wasserstoffperoxides bei der Herstellung des Produkte gesteuert werden kann, enthält das Produkt noch Anteile an nicht umgesetzten Calcium- bzw. Magnesiumoxid bzw. -hydroxid, wobei diese oxidischen bzw. hydroxidischen Anteile ebenfalls auf molekularer Ebene homogen im Calcium/Magnesium-Peroxid-Produkt verteilt vorliegen. Weiterhin kann das erfindungsgemäße Calcium/Magnesium-Peroxid geringfügige Mengen von üblichen Additiven und/oder Stabilisatoren enthalten, wie diese bei der Herstellung von anorganischen Persauerstoffverbindungen üblicherweise Verwendung finden. Solche Additive sind z. B. Wasserglas bzw. übliche Aktivsauerstoffstabilisatoren wie z. B. handelsübliche Phosphonsäuren und deren Salze. Das erfindungsgemäße Calcium/Magnesium-Peroxid besitzt vorteilhafte Stabilitätseigenschaften. So liegt beispielsweise der Trockenstabilverlust (gemessen unter Standardbedingungen: 1 g/2 h/105 °C) unter 10 %; vorzugsweise liegt der Trockenstabilverlust sogar unter 5 %, insbesondere unter 3 %.

Das erfindungsgemäße calcium/Magnesium-Peroxid zeichnet sich durch eine Reihe von Vorteilen aus. Zum einen wird Magnesium in einer homogen günstig verteilten Form im Peroxid-Produkt für die jeweilige Anwendung bereitgestellt. So kann das durch die Erfindung bereitgestellte Peroxid-Produkt gleichzeitig die Funktion des Sauerstofflieferanten und einer günstigen Magnesiumquelle erfüllen. Bei Einsatz des erfindungsgemäßen Calcium/Magnesium-Peroxides für verschiedenste, weiter unten angegebene Anwendungen muß daher kein separater Zusatz von Magnesiumsalzen (z. B. als Magnesiumsulfat oder Magnesiumsilikat) erfolgen; aufwendige Mischschritte zum Einbringen solcher separaten Magnesium-Verbindungen erübrigen sich somit.

Das Magnesium kann in das erfindungsgemäße Calcium/Magnesium-Peroxid in einfacher Weise eingebracht werden, indem man in konventionellen Verfahren zur Herstellung von Calciumperoxid als weiteren Ausgangsstoff lediglich auch eine geeignete Magnesiumquelle zusetzt. Geeignete Magnesiumquellen sind insbesondere Magnesiumoxid und/oder Magnesiumhydroxid; ggf. kann auch Magnesiumcarbonat eingesetzt oder mitverwendet werden. Demgemäß betrifft die Erfindung auch ein Verfahren zur Herstellung des erfindungsgemäßen homogenen Calcium/Magnesium-Peroxid-Produktes, das dadurch gekennzeichnet ist, daß man eine wäßrige Lösung oder wäßrige Suspension von Calciumhydroxid und von insbesondere Magnesiumoxid und/oder Magnesiumhydroxid mit einer 30 bis 70 gew.-%igen wäßrigen Wasserstoffperoxid-Lösung bei Temperaturen unter 60 °C umsetzt und daß man nach erfolgter Reaktion durch Verdampfung des Wassers und Trocknung des Reaktionsproduktes das gebildete Calcium/Magnesium-Peroxid-Produkt als Feststoff gewinnt. Vorzugsweise wird die Umsetzung bei Temperaturen im Bereich von etwa 30 bis 40 °C ausgeführt, insbesondere etwa bei 30 °C, wobei übliche Verfahren zur Kühlung, beispielsweise Wasserkühlung, zur Temperatureinstellung ausreichen. Gewünschtenfalls kann vorher, gleichzeitig oder nach der Umsetzung mit der wäßrigen Wasserstoff-Peroxidlösung ein Zusatz geringfügiger Mengen von an sich bei der Herstellung von anorganischen Persauerstoffverbindungen üblichen Additiven und/oder Stabilisatoren, wie diese bereits oben beispielhaft genannt wurden, erfolgen. Beispielsweise kann es zweckmäßig sein, als Additiv Wasserglas oder als Stabilisator übliche Aktivsauerstoff-Stabilisatoren wie Turpinal^{R} oder Dequest^{R} bei der Herstellung des erfindungsgemäßen Calcium/Magnesium-Peroxides zuzusetzen. Die konkrete Einhaltung von Verfahrensparametern stellt den Fachmann vor keine besonderen Probleme, da er sich hierbei an im Stand der Technik bekannten Verfahren zur Herstellung von Calciumperoxid orientieren kann. Das Verfahren zur Herstellung des erfindungsgemäßen Calcium/Magnesium-Peroxid-Mischproduktes kann hierbei sowohl in satzweiser als auch in kontinuierlicher Verfahrensweise durchgeführt werden. In einer bevorzugten Verfahrensvariante setzt man eine wäßrige Suspension von Calciumhydroxid mit Zusatz von Magnesiumcarbonat, Magnesiumoxid und/oder Magnesiumhydroxid mit der wäßrigen Wasserstoffperoxid-Lösung um. Bevorzugt werden hierbei Suspensionen mit Feststoffgehalten von 350 bis 450 g/l eingesetzt. Als wäßrige Wasserstoffperoxid-Lösung verwendet man bevorzugt Lösungen mit einem Wasserstoffperoxid-Gehalt von 45 bis 65 Gew.-%. Nach erfolgter Umsetzung kann das gebildete Calcium/Magnesium-Peroxid-Produkt als Feststoff in an sich üblicher Weise durch Verdampfung des Wassers und Trocknung des Reaktionsproduktes gewonnen werden. Bevorzugt erfolgt die Verdampfung des Wassers und die Trocknung des Reaktionsproduktes in einen Kurzzeittrockner, insbesondere z. B. in einem Sprühtrockner oder in einem Spin-Flash-Trockner.

Das erhaltene feste, homogene Calcium/Magnesium-Peroxid gemäß der Erfindung kann nachfolgend noch in gewünschter Weise konfektioniert werden. Beispielsweise kann das hergestellte Calcium/Magnesium-Peroxid durch Granulierung auf gewünschte Korngrößen eingestellt werden oder mit weiteren auf dem jeweiligen Verwendungsgebiet üblichen Komponenten formuliert werden. Das erfindungsgemäße Calcium/Magnesium-Peroxid kann auch direkt in Beutel oder gegebenenfalls auch in Sachets für die Verwendung bereitgestellt werden.

Durch das erfindungsgemäße Calcium/Magnesium-Peroxid-Produkt wird eine für die Anwendung, Aufbereitung, Behandlung und/oder Entsorgung von Biomaterialien vielfältig einsetzbare Sauerstoff- und Magnesiumquelle bereitgestellt, die zusätzlich in der Lage ist, in größerem Umfange unerwünschte Säuren abzupuffern. Sinngemäß betrifft die Erfindung auch die Verwendung des erfindungsgemäßen homogenen Calcium/Magnesium-Peroxides wie vorstehend beschrieben als Zuschlagstoff bei der Anwendung, Aufbereitung, Behandlung und/oder Entsorgung von Biomaterialien enthaltenden Medien. Biomaterialien enthaltende Medien sind z. B. Küchenabfälle und z. B. solche Massen, Schlämme und feuchte oder trockene Feststoffgemische, die verrottbare organische Materialien enthalten und üblicherweise auf den vorstehend genannten Anwendungsgebieten anfallen. Vorteilhaft läßt sich das erfindungsgemäße Calcium/Magnesium-Peroxid insbesondere für die Behandlung von Biomaterialien beim Kompostieren und/oder bei der Entsorgung von Bioabfällen verwenden. Die Anwendung bzw. der Einsatz des erfindungsgemäßen Calcium/Magnesium-Peroxid-Produktes reicht daher vom Einsatz in Biotonnen, Biotonnensammelstellen, bei der Kompostierung, bei der Verarbeitung bzw. Entsorgung von Grasschnitt, bis hin zur Aufbereitung von Fäkalien wie z. B. Kuhmist oder Schweinegülle zu Dünger.

Die nachfolgenden Beispiele sollen die Erfindung weiter erläutern, ohne sie jedoch in ihrem Umfange einzuschränken.

### Beispiel 1

In einem Reaktionsbehälter, der mit einer Kühleinrichtung versehen war, wurde etwa 1/20igstel der im Reaktionsansatz benötigten Gesamtmenge einer 60 gew.-%igen Wasserstoffperoxid-Lösung vorgelegt. Anschließend wurde simultan eine Suspensionsmischung aus Calciumhydroxid und Magnesiumoxid bzw. Magnesiumhydroxid mit weiterem Wasserstoffperoxid umgesetzt. Die eingesetzten Reaktionskomponenten kamen in folgenden Mengen zum Einsatz:
- 12,1 kg Calciumhydroxid
- 1,2 kg Magnesiumhydroxid
- 8,7 kg wäßriges Wasserstoffperoxid (60 gew.-%ig); zusätzlich zu den etwa 0,5 kg Wasserstoffperoxid (60 gew.-%ig), die vorgelegt wurden.

Die eingesetzte Menge an Wasserstoffperoxid war somit in etwa äquimolar zu den eingesetzten Reaktanden Calcium und Magnesium. Zusätzlich wurde zum Schluß des Reaktionsansatzes eine Menge von einer 140 ml Natrium-Wasserglas-Lösung zugesetzt. Die Reaktionstemperatur wurde während der gesamten Umsetzung bei etwa 40 °C gehalten. Die so hergestellte Maische mit einem Feststoffgehalt von 300 g/l wurde dann in einem Sprühtrockner unter folgenden Bedingungen getrocknet:
T_{Eingang} 380 °C
T_{Ausgang} 120 °C
Umfangsgeschwindigkeit der Sprühscheibe: 154 m/s
Produkttemperatur ca. 50 °C

Man erhielt ein pulverförmiges Calcium/Magnesium-Peroxid-Produkt mit folgender Zusammensetzung:

| | |
|---|---|
| Calciumgehalt | 46,8 Gew.-% |
| Magnesiumgehalt | 4,2 Gew.-% |
| Avox-Gehalt | 15,9 Gew.-% |

und folgenden Eigenschaften:

| | |
|---|---|
| Naßstabilverlust | 13,6 % |
| Trockenstabilverlust | 2,7 % |

### Beispiel 2

Analog zum Beispiel 1 wurden folgende Mengen der Edukte umgesetzt:
- 10,8 kg Calciumhydroxid
- 0,55 kg Magnesiumhydroxid
- 1,51 kg Magnesiumoxid
- 10,7 kg wäßriges Wasserstoffperoxid (60 gew.-%ig); zusätzlich zu den etwa 0,5 kg Wasserstoffperoxid (60 gew.-%ig), die vorgelegt wurden.
- 225 ml Wasserglas

Man erhielt ein Calcium-Magnesium-Peroxid-Produkt mit folgender Zusammensetzung:

| | |
|---|---|
| Calciumgehalt | 43,1 Gew.-% |
| Magnesiumgehalt | 8,5 Gew.-% |
| Avox-Gehalt | 15,4 Gew.-% |

und folgenden Eigenschaften:

| | |
|---|---|
| Naßstabilverlust | 12,5 % |
| Trockenstabilverlust | 3,6 % |

### Beispiel 3

Analog zum Beispiel 1 wurden folgende Mengen der Edukte umgesetzt:
- 12,9 kg Calciumhydroxid
- 0,7 kg Magnesiumhydroxid
- 9,6 kg wäßriges Wasserstoffperoxid (60 gew.-%ig); zusätzlich zu den etwa 0,5 kg Wasserstoffperoxid (60 gew.-%ig), die vorgelegt wurden.
- 225 ml Wasserglas

Man erhielt ein Calcium-Magnesium-Peroxid-Produkt mit folgender Zusammensetzung:

| | |
|---|---|
| Calciumgehalt | 49,7 Gew.-% |
| Magnesiumgehalt | 2,3 Gew.-% |
| Avox-Gehalt | 16,5 Gew.-% |

und folgenden Eigenschaften:

| | |
|---|---|
| Naßstabilverlust | 12,2 % |
| Trockenstabilverlust | 2,1 % |

### Legende

- Avox (= AVOX): = Aktivsauerstoff(-Gehalt)
- Turpinal: = wäßrige 60 Gew.-%ige Lösung von 1-Hydroxyethan-1,1-diphosphonsäure (HEDP); Stabilisierungsmittel für Peroxide
- h: = Stunde
- Min. (= min.): = Minute

### Naßstabilität: (Naßstabilverlust)

Es wird die Stabilität einer Peroxidprobe in wäßrigem Medium bei erhöhter Temperatur über den Verlust an Aktivsauerstoff bestimmt. Hierzu wird eine eingewogene Menge von 1,000 g der Peroxidprobe mit bekanntem Avox-Gehalt mit 1,56 ml Wasser versetzt und dann in einem verschlossenen Gefäß für 20 Min. bei 90 °C in einen Thermostaten gestellt. Danach wird die Probe in ca. 100 ml Mischsäure (Zusammensetzung: 1 l HCl, 37 Gew.-%/1 l H₃PO₄, 85 Gew.-%/6 l H₂O entmineralisiert) gelöst und mit Kaliumpermanganatlösung bis zu einer bleibenden, schwachen Rosafärbung titriert. Der Stabilverlust in % ergibt sich als wiedergefundener Avox-Gehalt bezogen auf den ursprünglichen Avox-Gehalt.

### Trockenstabilität: (Trockstabilverlust)

Es wird die Stabilität einer trockenen Peroxidprobe bei erhöhter Temperatur über den Verlust an Aktivsauerstoff bestimmt. Hierzu wird eine eingewogene Menge von 1,000 g der Peroxidprobe mit bekanntem Avox-Gehalt in einem Reagenzglas für 2 h bei 105 °C in einen Thermostaten gestellt. Danach wird die Probe in ca. 100 ml Mischsäure (Zusammensetzung: 1 l HCl, 37 Gew.-%/1 l H₃PO₄, 85 Gew.-%/6 l H₂O entmineralisiert) gelöst und mit Kaliumpermanganatlösung bis zu einer bleibenden, schwachen Rosafärbung titriert. Der Stabilverlust in % ergibt sich als wiedergefundener Avox-Gehalt bezogen auf den ursprünglichen Avox-Gehalt.

## Patentansprüche

1. Homogenes Calcium/Magnesium-Peroxid, mit einem Calciumgehalt von 30 bis 53 Gew.-%, einen Magnesiumgehalt von 2. bis 17 Gew.-%, einen Aktivsauerstoffgehalt (Avox-Gehalt) von 13 bis 17 Gew.-% und einem Trockenstabilverlust, gemessen unter Standardbedingungen 1 g/2 h/105 °C, unter 10 %, vorzugsweise unter 5 %,
dadurch erhältlich, daß man eine wäßrige Lösung oder eine wäßrige Suspension von Calciumhydroxid und von Magnesiumoxid und/oder Magnesiumhydroxid mit einer 30 bis 70 gew.-%igen wäßrigen Wasserstoffperoxid-Lösung bei 30 °C bis 40 °C umsetzt und daß man nach erfolgter Reaktion durch Verdampfung des Wassers und Trocknung des Reaktionsproduktes in einem Sprühtrockner das gebildete Calcium/Magnesium-Peroxid-Produkt als Feststoff gewinnt.

2. Calcium/Magnesium-Peroxid nach Anspruch 1, **gekennzeichnet durch** einen Magnesiumgehalt von 2 bis 10 Gew.-%.

3. Calcium/Magnesium-Peroxid nach Anspruch 1, **gekennzeichnet durch** einen Calciumgehalt von 40 bis 50 Gew.-%.

4. Verfahren zur Herstellung eines homogenen Calcium/-Magnesium-Peroxides gemäß einem der Ansprüche 1 bis 3, **dadurch gekennzeichnet, daß** man eine wäßrige Lösung oder eine wäßrige Suspension von Calciumhydroxid und von Magnesiumoxid und/oder Magnesiumhydroxid mit einer 30 bis 70 gew.-%igen wäßrigen Wasserstoffperoxid-Lösung bei 30 °C bis 40 °C und gegebenenfalls unter vorherigem, gleichzeitigem oder nachfolgendem Zusatz geringfügiger Mengen von bei der Herstellung von anorganischen Persauerstoffverbindungen üblichen Additiven und/oder Stabilisatoren umsetzt und daß man nach erfolgter Reaktion durch Verdampfung des Wassers und Trocknung des Reaktionsproduktes in einem Sprühtrockner das gebildete Calcium/Magnesium-Peroxid-Produkt als Feststoff gewinnt.

5. Verfahren nach Anspruch 4, **dadurch gekennzeichnet, daß** man eine 45 bis 65 gew.-%ige wäßrige Wasserstoffperoxid-Lösung einsetzt.

6. Verfahren nach Anspruch 4, **dadurch gekennzeichnet, daß** man eine wäßrige Suspension von Calciumhydroxid und von Magnesiumoxid und/oder Magnesiumhydroxid, vorzugsweise eine Suspension mit Feststoffgehalten von 350 bis 450 g/l mit der wäßrigen Wasserstoffperoxid-Lösung umsetzt.

7. Verwendung eines homogenen Calcium/Magnesium-Peroxides gemäß einem der Ansprüche 1 bis 3 als Zuschlagstoff bei der Anwendung, Aufbereitung, Behandlung und/oder Entsorgung von Biomaterialien enthaltenden Medien, insbesondere als Zuschlagstoff für die Behandlung von Biomaterialien beim Kompostieren oder als Zuschlagstoff bei der Entsorgung von Bioabfällen.

## Claims

1. Homogeneous calcium/magnesium peroxide with a calcium content of 30 to 53 weight per cent, a magnesium content of 2 to 17 weight per cent, an active oxygen content (AvOx content) of 13 to 17 weight per cent and a loss of dry stability, measured under standard conditions of 1 g/2 h/105°C, of less than 10%, preferably less than 5%, obtainable by reacting an aqueous solution or an aqueous suspension of calcium hydroxide and of magnesium oxide and/or magnesium hydroxide with an aqueous hydrogen peroxide solution of 30 to 70 weight per cent at 30°C to 40°C and, after the reaction has taken place, by evaporating the water and drying the reaction product in a spray dryer, producing the accumulated calcium/magnesium peroxide product as a solid.

2. Calcium/magnesium peroxide according to claim 1, **characterised by** a magnesium content of 2 to 10 weight per cent.

3. Calcium/magnesium peroxide according to claim 1, **characterised by** a calcium content of 40 to 50 weight per cent.

4. Method for the manufacture of a homogeneous calcium/magnesium peroxide according to one of claims 1 to 3, **characterised by** reacting an aqueous solution or an aqueous suspension of calcium hydroxide and of magnesium oxide and/or magnesium hydroxide with an aqueous hydrogen peroxide solution of 30 to 70 weight per cent at 30°C to 40°C and, if necessary, with prior, simultaneous or subsequent addition of small quantities of additives and/or stabilisers commonly used in the manufacture of inorganic peroxides, and, after the reaction has taken place, by evaporating the water and drying the reaction product in a spray dryer, producing the accumulated calcium/magnesium peroxide product as a solid.

5. Method according to claim 4, **characterised by** using an aqueous hydrogen peroxide solution of 45 to 65 weight per cent.

6. Method according to claim 4, **characterised by** reacting an aqueous suspension of calcium hydroxide and of magnesium oxide and/or magnesium hydroxide, preferably a suspension with solids contents of 350 to 450 g/l, with the aqueous hydrogen peroxide solution.

7. Use of a homogeneous calcium/magnesium peroxide according to one of claims 1 to 3 as an additive when using, processing, treating and/or disposing of media that contain biomaterials, in particular as an additive for the treatment of biomaterials when composting or as an additive when disposing of biological waste.

## Revendications

1. Peroxyde de calcium/magnésium homogène avec une teneur en calcium comprise entre 30 et 53 pour cent en masse, une teneur en magnésium comprise entre 2 et 17 pour cent en masse, une teneur en oxygène actif (teneur en AvOx) comprise entre 13 et 17 pour cent en masse et une perte de stabilité à sec, mesurée sous conditions normales de 1 g/2 h/105°C, de moins de 10 %, et de préférence de moins de 5 %, obtenu en faisant réagir une solution aqueuse ou une suspension aqueuse d'hydroxyde de calcium et d'oxyde de magnésium et/ou d'hydroxyde de magnésium avec une solution aqueuse d'eau oxygénée d'une teneur comprise entre 30 et 70 pour cent en masse à 30°C - 40°C et, à la fin de cette réaction, en faisant évaporer l'eau et sécher le produit de réaction dans un séchoir-atomiseur, le résultat étant la production de peroxyde de calcium/magnésium accumulé sous forme de solide.

2. Peroxyde de calcium/magnésium, conforme à la revendication 1, **caractérisé par** une teneur en magnésium comprise entre 2 et 10 pour cent en masse.

3. Peroxyde de calcium/magnésium, conforme à la revendication 1, **caractérisé par** une teneur en calcium comprise entre 40 et 50 pour cent en masse.

4. Méthode de préparation de peroxyde de calcium/magnésium homogène, conforme à l'une des revendications 1 à 3, **caractérisée par** la réaction entre une solution aqueuse ou une suspension aqueuse d'hydroxyde de calcium et d'oxyde de magnésium et/ou d'hydroxyde de magnésium et une solution aqueuse d'eau oxygénée à la concentration comprise entre 30 et 70 pour cent en masse à 30°C - 40°C et, si nécessaire, avec addition antérieure, simultanée ou ultérieure de petites quantités d'additifs et/ou de stabilisants couramment utilisés dans la préparation de peroxydes inorganiques et, à la fin de la réaction, en faisant évaporer l'eau et sécher le produit de réaction dans un séchoir-atomiseur, le résultat étant du peroxyde de calcium/magnésium accumulé sous forme de solide.

5. Méthode conforme à la revendication 4, **caractérisée par** l'usage d'une solution aqueuse d'eau oxygénée de concentration comprise entre 45 et 65 pour cent en masse.

6. Méthode conforme à la revendication 4, **caractérisée par** la réaction entre une suspension aqueuse d'hydroxyde de calcium et d'oxyde de magnésium et/ou d'hydroxyde de magnésium, ayant de préférence une teneur en solides comprise entre 350 et 450 g/l, et une solution aqueuse d'eau oxygénée.

7. Utilisation d'un peroxyde de calcium/magnésium homogène, conforme à l'une des revendications 1 à 3, en tant qu'additif, lors de l'emploi, de la manipulation, du traitement et/ou de l'élimination de milieux contenant des substances biologiques, et en particulier en tant qu'additif pour le traitement de substances biologiques durant le compostage ou bien l'élimination de déchets biologiques.
